# EUROPÄISCHE PATENTSCHRIFT

(11) **EP 2 784 540 B1**
(45) Veröffentlichungstag und Bekanntmachung des Hinweises auf die Patenterteilung: **31.08.2016**
(21) Anmeldenummer: 13161338.2
(22) Anmeldetag: 27.03.2013
(51) Int. Cl.: B61K 9/08, G01S 17/42

(54) **Verfahren und Vorrichtung zur Ermittlung des Verschleißzustandes eines Gleises**
Method and device for determining the wear level of a track
Procédé et dispositif de détermination de l'état d'usure d'un rail

(43) Veröffentlichungstag der Anmeldung: 01.10.2014
(73) Patentinhaber: System7-Railsupport GmbH, 1010 Wien (AT)
(72) Erfinder: Lichtberger, Bernhard, 4230 Pregarten (AT)
(74) Vertreter: Patentanwaltskanzlei Hübscher

(56) Entgegenhaltungen:
- WO-A1-01/86227
- PAVEL BABENKO: "VISUAL INSPECTION OF RAILROAD TRACKS", DISSERTATION UNIVERSITY OF CENTRAL FLORIDA,, 1. Januar 2009 (2009-01-01), Seiten 1-113, XP007921983,
- MUBARAK SHAH: "Automated Visual Inspection/Detection of Railroad Track", FINAL REPORT,, Nr. BD550, RPWO nbr. 8, 1. Juli 2010 (2010-07-01), Seiten 1-55, XP007921984,

## Beschreibung

Die Erfindung bezieht sich auf ein Verfahren und eine Vorrichtung zur Ermittlung des Verschleißzustandes eines Gleises, insbesondere des Herzstückes und der Zunge einer Weiche, mit auf einem entlang des zu vermessenden Gleises verfahrbaren Messwagen angeordneten Sensoren zur Vermessung des Gleises.

Bekannte Vorrichtungen zur Ermittlung des Verschleißzustandes eines Gleises sind Hand geschobene Geräte die mittels mechanischer Abtastung in Weichen den Verschleißzustand des Herzstückes und der Zunge und andere Parameter erfassen. Für die manuelle Prüfung ist ein großer Personalaufwand erforderlich. Der zeitliche Aufwand bei der manuellen Messung beträgt 20-30min. In der Weiche selbst werden dabei bestimmt diskrete Punkte angefahren und das jeweilige Schienenprofil, insbesondere das Herzstück und die Zunge einer Weiche, gemessen. Die dabei aufgenommenen Werte werden in einem Computer zur weiteren Auswertung abgespeichert. Weichen werden mindestens 1-2-mal pro Jahr inspiziert, wobei die Häufigkeit der Inspektion von den am jeweiligen Gleis gefahrenen Geschwindigkeiten und von der Betriebsbelastung abhängt. Zudem ist es bekannt die Verschleißmessung manuell mittels Messlehren vorzunehmen. Mit bekannten Weichenmessgeräten können die Leitweite, der Radlenkerleitflächenabstand, die Spurweite, Spurweitenunterschiede benachbarter Messpunkte, die Rillenweite, die Durchlaufrille, die Querhöhe aber nicht die Verwindung ge- bzw. vermessen werden.

PMD-Sensoren oder Photomischdetektoren sind optische Sensoren, die insbesondere als Bildsensoren in Laufzeit-Kameras (TOF-Kameras) eingesetzt werden. Solche Kameras sind 3D-Kamerasysteme, die Distanzen mit dem Laufzeitverfahren messen. Jedem Bildpunkt wird dabei die Entfernung seiner Entsprechung am aufgenommenen Objekt von der Kamera zugeordnet. Hierfür wird das Objekt mit einem Lichtpuls angeleuchtet und misst die Kamera für jeden Bildpunkt die Lichtlaufzeit, also jene Zeit, die das Licht bis zum Objekt und wieder zurück zur Kamera benötigt. Dieses Halbleiterbauelement ermöglicht es, Entfernungen direkt zu sehen. Das resultierende Entfernungsbild kann auf verschiedene Weisen später dargestellt werden. Zusätzlich zu der Entfernung kann ein Intensitätsbild aus der Intensität des reflektierten Lichts angezeigt werden. Das Funktionsprinzip entspricht dem Laserscanning mit dem Vorteil, dass das Objekt auf einmal aufgenommen werden kann und nicht scheibchenweise abgetastet werden muss. Dabei ist mit den konventionellen Laserschnittverfahren immer nur der durch den Lichtstrahl direkt erreichbare Bereich abbildbar. Laserscanner sind aber nicht nur teuer, von besonderem Nachteil ist der, wegen der scheibchenweisen Abtastung, Zeitaufwand dafür.

Der Erfindung liegt somit die Aufgabe zugrunde, ein Verfahren und eine Vorrichtung zur Ermittlung des Verschleißzustandes eines Gleises, insbesondere des Herzstückes und der Zunge einer Weiche, zu schaffen, wobei eine möglichst exakte Vermessung in erheblich kürzerer Zeit bei geringerem Personalaufwand möglich sein soll.

Die Erfindung löst die gestellte Aufgabe dadurch, dass mit wenigstens einem gegen ein zu vermessendes Gleis gerichteten PMD-Sensor Messdaten aufgenommen und in einer Rechner- Speichereinheit ausgewertet und abgespeichert werden, wobei die durchgehende Schiene als Referenz dient, und der PMD-Sensor auf dem Messwagen quer zur Fahrgestelllängsachse entlang einer Linearführung verlagerbar ist und sowohl die jeweilige Lage des PMD-Sensors am Messwagen als auch der auf dem Gleis zurückgelegte Weg des Messwagens gemessen und der Rechner- Speichereinheit zugeführt werden und dass der Verschleißzustand aus einem Vergleich des 3D-Modelles des Istzustandes des Gleises mit einem 3D-Soll-Modell des Gleises ermittelt wird.

Ein für die Erfindung geeigneter Messwagen ist insbesondere zweiachsig ausgeführt, wobei die beiden Achsen in üblicher Weise in einem Rahmen, einem Fahrgestell, gelagert sind. Auf diesem Rahmen ist eine Linearführung für eine Linearverstellung des wenigstens einen PMD-Sensors als Teil einer LaufzeitKamera quer zur Fahrgestelllängsachse angeordnet. Der Messwagen kann zur Vermessung des Gleises entweder manuell oder motorisch angetrieben verfahren werden. Über einen der Linearführung zugeordneten Wegsensor kann die exakte Position des Querschlittens am Rahmen gemessen bzw. eine gewünschte Position angesteuert werden. Damit können die Spurweite, die Rillenweite, die Leitweite u. dgl. ausgerechnet und angegeben werden. An eine der Achsen ist vorzugsweise ein weiterer Wegsensor angebaut mit dessen Hilfe der Weg den der Wagen am Gleis zurücklegt gemessen werden kann. Als Startpunkt wird beispielsweise ein signifikanter Punkt der Weiche, meist der Weichenanfang, gewählt werden. Der Messwagen ist mit einer Rechner-Speichereinheit ausgestattet, welche die 3D- Bilder zusammen mit den Daten der Wegsensoren und gegebenenfalls anderen Messdaten speichert und vorzugsweise sogleich auswertet, sowie eventuell einen elektrischen Antrieb des Messwagens steuert. Dabei empfiehlt es sich den Messwagen an die Referenzschiene anzudrücken.

Das von der Laufzeitkamera ausgesendete modulierte Lichtsignal, z. B. unsichtbares Infrarotlicht, beleuchtet die zu vermessende Szene, hier im Besonderen den zu vermessenden Schienenstrang. Das von der Schiene, Weiche reflektierte Licht trifft auf den PMD-Sensor, wo die in Elektronen gewandelten Photonen in Abhängigkeit vom Referenzsignal noch im lichtempfindlichen Halbleiterbereich pixelweise mit Hilfe der so genannten Ladungsträgerschaukel entfernungsselektiv getrennt werden. Durch diesen einfachen Vergleichsprozess zwischen dem optischen Mess- und dem elektronischen Referenzsignal stellt das resultierende Ausgangssignal des Sensors bereits einen direkten Bezug zur 3D-Information dar. Ein besonderer Vorteil des PMD-Systems liegt darin, dass eine effiziente Unterdrückung von Fremdlicht (z. B. Sonneneinstrahlung) erreicht wird. Das aktive Sendersignal kann aus dem Umgebungslicht herausgefiltert werden und ermöglicht dadurch den Einsatz derartiger Systeme auch unter schwierigen Umgebungsbedingungen.

Mit jedem Bild steigt die Dichte der aufgenommenen Punkte und damit die Feinheit und Genauigkeit der Messung. Mit bekannten Bildauswerteverfahren ist es möglich die in Folge ausgewerteten Bilder zu detaillieren, räumlich zusammensetzen und die Genauigkeit der Einzelmessungen zu verbessern. Wird also der Sensor an einem zu vermessenden Gegenstand, wie hier beispielsweise das Herzstück einer Weiche od. dgl. vorbeibewegt, wird dieser räumlich sehr exakt erfasst.

In weiterer Folge können während der Bewegung des PMD-Sensors mit dem Messwagen entlang des Gleises, insbesondere über Weicheneinrichtungen und/oder quer zur Fahrgestelllängsachse der Istzustand des Gleises und der Weicheneinrichtungen, insbesondere der Zungen- oder Herzstückbereich einer Weiche sowie einzelne Backen- oder Flügelschienen vermessen und zu einem kontinuierlichen 3D-Modell ausgewertet und abgespeichert. Damit kann die gegebene Abnutzung dreidimensional erfasst werden. Mit in zeitlichem Abstand, wie Wochen bzw. Monaten, vorgenommenen Messungen kann eine Verschleißentwicklung sowohl der Form nach, als auch des Volumenabtrags nach, beurteilt werden, womit Prognosen über den Zeitpunkt erforderlicher Wartungsarbeiten getroffen werden können. Die mit den Messungen mitgelieferten Bilder liefern eine Sicht auf die Schienen- bzw. Weichenteile, als wäre man vor Ort, was eine saubere Qualitätskontrolle der Messung ermöglicht.

In die aufgenommenen 3D-Bilder können bei Bedarf Räder mit verschiedenen Radprofilen mit diversen Verschleißzuständen eingeblendet werden, um so die Berührpunkte des Rades mit dem jeweiligen Schienenprofil untersuchen zu können, um die vorhandenen Abnutzungen zu messen, die Einhaltung bzw. Überschreitung vorgegebener Toleranzen zu prüfen u. dgl. Die Erfassung mit 3-D Koordinaten erlaubt dann eine direkte Messung der Abstände z.B. zwischen Radprofil und Schienenprofil. Zudem kann das 3D-Modell des Istzustandes des Gleises mit einem 3D-Soll-Modell des Gleises verglichen und können die vorhandenen Abnutzungen gemessen und die Einhaltung bzw. Überschreitung vorgegebener Toleranzen geprüft und gegebenenfalls angezeigt werden.

Zudem empfiehlt es sich die Überhöhung und die Verwindung des Gleises mit einem Neigungswinkelsensor zu messen, um auch Vergleichsmöglichkeiten für eventuelle Setzungen des Gleisbettes zu haben. Wird auch die Referenzschiene vom PMD-Sensor erfasst, muss der Messwagen nicht unbedingt an die Referenzschiene angepresst werden. Wird das zu vermessende Gleis mit zwei gegen das Gleis gerichteten PMD-Sensoren zur stereoskopischen Erfassung des Gleises vermessen, so kann die Messgenauigkeit mit verhältnismäßig geringem Aufwand verbessert werden.

Zur Kalibrierung der PMD-Sensoranlage kann ein Kalibrierobjekt, insbesondere ein Kalibrierprofil vorgesehen sein, das in bekanntem Abstand zu dem PMD-Sensor angeordnet ist.

Eine Vorrichtung zur Ermittlung des Verschleißzustandes eines Gleises, insbesondere des Herzstückes und der Zunge einer Weiche, ist unter anderem mit auf einem wenigstens zwei Achsen umfassenden Messwagen angeordneten Sensoren zur Vermessung des Gleises und mit einem Wegmesssensor für den zurückgelegten Messwagenweg ausgestattet. Die Achsen sind in einem Fahrgestell angeordnet, dem wenigstens ein, gegen ein zu vermessendes Gleis gerichteter, quer zur Fahrgestelllängsachse entlang einer Linarführung verlagerbarer, PMD-Sensor zugeordnet ist. Zudem ist eine Rechner- Speichereinheit zur Auswertung und zum Abspeichern der Sensordaten vorgesehen. Eine Ermittlung des Verschleißzustandes des Gleises erfolgt aus einem Vergleich des 3D-Modelles des Istzustandes des Gleises mit einem 3D-Soll-Modell des Gleises. Dem Fahrgestell gehört vorzugsweise eine Linearführung zu, mit der der wenigstens eine PMD-Sensor quer zur Fahrgestelllängsachse verlagerbar ist, wobei der Linearführung vorzugsweise ein Lagesensor zur Bestimmung der PMD-Sensorlage entlang der Führung zugeordnet ist. Dem Fahrgestell kann ein Neigungswinkelsensor zur Messung der Überhöhung des Gleises zugeordnet sein.

Außerdem empfiehlt es sich, wenn die Radlaufflächen der Messwagenräder zylinderförmig ausgebildet sind und wenigstens die Spurkränze der dem zu vermessenden Gleis zugeordneten Laufräder gegenüber dem Radlaufflächenzylinder in Richtung der Zylinderachse beweglich gelagert und besagte Spurkränze gegen das zu vermessende Gleis anstellbar sind, um einen konstanten Abstand des PMD-Sensors zur zu vermessenden Schienenoberkante zu gewährleisten. Dies bedingt einen verringerten Schlupf der Räder, eine genauere Längswegmessung und gewährleistet, dass der Messwagen stets spielfrei und der PMD-Sensor in definiertem Abstand zur Referenzschiene geführt ist. Aus der Messung des zurückgelegten Weges in der Weiche, der gewünschten Basis der Verwindung kann aus den gespeicherten Überhöhungswerten die Verwindung errechnet werden. Die Elektronik kann mit Tasten bzw. mit einem Programm ausgestattet werden, welches die 3-D Bilder auch exakt bestimmten Messorten der Weiche zuordnet. Diese Punkte können visuell sichtbar im Gleis an der Schiene z.B. mit Kreide markiert werden, dann ist die Zuordnung auch direkt im Bild erfasst und zuordenbar - sonst nur über den gemessenen Weg.

Über eine zusätzlich aufgebaute GPS-Anlage wäre auch eine absolute Zuordnung der Messungen möglich.

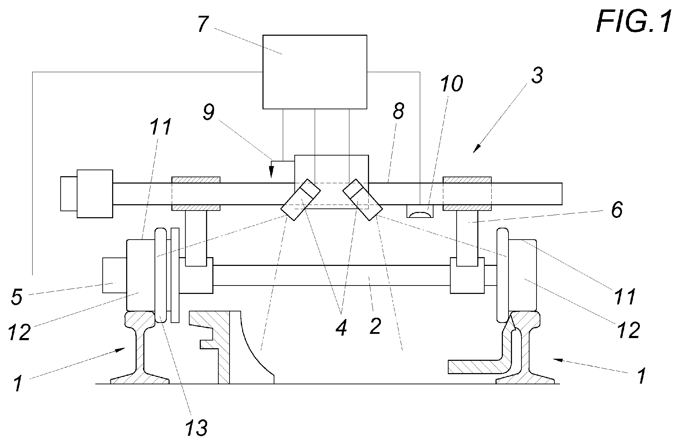

In der Zeichnung ist der Erfindungsgegenstand beispielsweise dargestellt. Es zeigen
- Fig. 1: Einen Ausschnitt einer erfindungsgemäßen Vorrichtung zur Ermittlung des Verschleißzustandes eines Gleises im teilgeschnittenen Querschnitt und

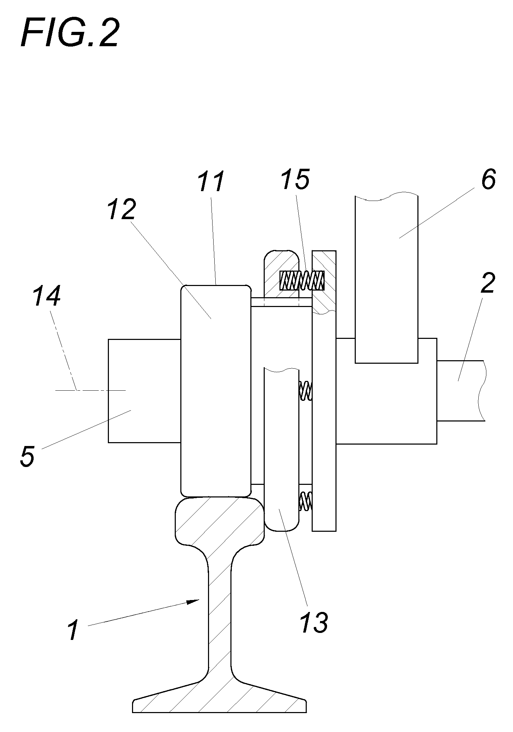

- Fig. 2: ein vergrößertes Laufrad des Messwagens aus Fig. 1 in teilgeschnittener Ansicht.

Die Vorrichtung zur Ermittlung des Verschleißzustandes eines Gleises 1, insbesondere des Herzstückes und der Zunge einer Weiche, mit auf einem wenigstens zwei Achsen 2 umfassenden Messwagen 3 angeordneten Sensoren 4 zur Vermessung des Gleises 1 und mit einem Wegmesssensor 5 für den zurückgelegten Messwagenweg. Die Achsen 2 sind in einem Fahrgestell 6 angeordnet sind, dem zwei gegen zwei zu vermessende Schienenstränge im Bereich einer Weiche gerichtete PMD-Sensoren 4 zugeordnet sind. Zur Auswertung und zum Abspeichern der Sensordaten ist eine Rechner- Speichereinheit 7 vorgesehen.

Dem Fahrgestell 6 gehört eine Linearführung 8 zu, entlang welcher der wenigstens eine PMD-Sensor 4 quer zur Fahrgestelllängsachse verlagerbar ist, wobei der Linearführung vorzugsweise ein Lagesensor 9 zur Bestimmung der PMD-Sensorlage entlang der Führung 8 zugeordnet ist. Außerdem gehört dem Fahrgestell 6 ein Neigungswinkelsensor 10 zur Messung der Überhöhung des Gleises zu.

Die Radlaufflächen 11 der Messwagenräder 12 sind zylinderförmig ausgebildet. Zudem sind die einem Schienenstrang zugeordneten Spurkränze 13 gegenüber dem jeweils zugeordneten Radlaufflächenzylinder 11 in Richtung der Zylinderachse 14 beweglich gelagert und besagte Spurkränze 13 somit gegen das zu vermessende Gleis 2 anstellbar. Dazu sind im Ausführungsbeispiel Schraubenfedern 15 vorgesehen.

## Patentansprüche

1. Verfahren zur Ermittlung des Verschleißzustandes eines Gleises (1), insbesondere des Herzstückes und der Zunge einer Weiche, mit auf einem entlang des zu vermessenden Gleises (1) verfahrbaren Messwagen (3) angeordneten Sensoren (4, 5) zur Vermessung des Gleises (1), **dadurch gekennzeichnet, dass** mit wenigstens einem gegen ein zu vermessendes Gleis (1) gerichteten PMD-Sensor (4) Messdaten aufgenommen und in einer Rechner- Speichereinheit (7) ausgewertet und abgespeichert werden, wobei die durchgehende Schiene als Referenz dient, und der PMD-Sensor (4) auf dem Messwagen (3) quer zur Fahrgestelllängsachse entlang einer Linearführung (8) verlagerbar ist und sowohl die jeweilige Lage des PMD-Sensors (4) am Messwagen (3) als auch der auf dem Gleis (1) zurückgelegte Weg des Messwagens (3) gemessen und der Rechner- Speichereinheit (7) zugeführt werden und dass der Verschleißzustand aus einem Vergleich des 3D-Modelles des Istzustandes des Gleises (1) mit einem 3D-Soll-Modell des Gleises (1) ermittelt wird.

2. Verfahren nach Anspruch 1, **dadurch gekennzeichnet, dass** während der Bewegung des PMD-Sensors (4) mit dem Messwagen (3) entlang des Gleises (1), insbesondere über Weicheneinrichtungen, und/oder quer zur Fahrgestelllängsachse der Istzustand des Gleises (1) und der Weicheneinrichtungen, insbesondere der Zungen- oder Herzstückbereich einer Weiche sowie einzelne Backen- oder Flügelschienen, vermessen und zu einem kontinuierlichen 3D-Modell ausgewertet und abgespeichert werden.

3. Verfahren nach Anspruch 1 oder 2, **dadurch gekennzeichnet, dass** das 3D-Modell des Istzustandes des Gleises (1) mit einem 3D-Soll-Modell des Gleises (1) verglichen, die vorhandenen Abnutzungen gemessen und die Einhaltung bzw. Überschreitung der vorgegebenen Toleranzen geprüft und gegebenenfalls angezeigt werden.

4. Verfahren nach einem der Ansprüche 1 bis 3, **dadurch gekennzeichnet, dass** zudem die Überhöhung des Gleises (1) mit einem Neigungswinkelsensor (10) gemessen und die Verwindung des Gleisstranges gemessen wird.

5. Verfahren nach einem der Ansprüche 1 bis 4, **dadurch gekennzeichnet dass** auch die Referenzschiene vom PMD-Sensor (4) erfasst wird.

6. Verfahren nach einem der Ansprüche 1 bis 5, **dadurch gekennzeichnet dass** dem Messwagen (3), insbesondere der Linearführung, wenigstens ein zweiter PMD-Sensor (4) zugeordnet ist, der den als Referenz dienenden Schienenstrang vermisst und damit auch die Referenzschiene als 3D-Modell abgebildet.

7. Verfahren nach einem der Ansprüche 1 bis 6, **dadurch gekennzeichnet dass** das zu vermessende Gleis (1) mit zwei gegen das Gleis (1) gerichteten PMD-Sensoren (4) zur stereoskopischen Erfassung des Gleises (1) vermessen wird.

8. Verfahren nach einem der Ansprüche 1 bis 7, **dadurch gekennzeichnet dass** zur Kalibrierung der PMD-Sensoranlage ein Kalibrierobjekt, insbesondere eine Kalibrierplatte mit einem Kalibrierprofil vorgesehen ist, das in bekanntem Abstand zu dem PMD-Sensor angeordnet ist.

9. Verfahren nach einem der Ansprüche 1 bis 8, **dadurch gekennzeichnet dass** der Messwagen (3) gegen die Referenzschiene angepresst wird.

10. Vorrichtung zur Ermittlung des Verschleißzustandes eines Gleises (1), insbesondere des Herzstückes und der Zunge einer Weiche, mit auf einem wenigstens zwei Achsen (2) umfassenden Messwagen (3) angeordneten Sensoren (4, 5) zur Vermessung des Gleises (1) und mit einem Wegmesssensor (5) für den zurückgelegten Messwagenweg, **dadurch gekennzeichnet, dass** die Achsen (2) in einem Fahrgestell (6) angeordnet sind, dem wenigstens ein, gegen ein zu vermessendes Gleis (1) gerichteter, quer zur Fahrgestelllängsachse entlang einer Linarführung (8) verlagerbarer, PMD-Sensor (4) zugeordnet ist und mit einer Rechner- Speichereinheit (7) zur Auswertung und zum Abspeichern der Sensordaten und zur Ermittlung des Verschleißzustandes aus einem Vergleich des 3D-Modelles des Istzustandes des Gleises (1) mit einem 3D-Soll-Modell des Gleises (1).

11. Vorrichtung nach Anspruch 10, **dadurch gekennzeichnet, dass** dem Fahrgestell (6) eine Linearführung (8) zugehört, entlang welcher der wenigstens eine PMD-Sensor (4) quer zur Fahrgestelllängsachse verlagerbar ist, wobei der Linearführung (8) vorzugsweise ein Lagesensor (9) zur Bestimmung der PMD-Sensorlage entlang der Führung zugeordnet ist.

12. Vorrichtung nach Anspruch 11, **dadurch gekennzeichnet, dass** dem Fahrgestell (5) ein Neigungswinkelsensor (10) zur Messung der Überhöhung des Gleises zugeordnet ist.

13. Vorrichtung nach Anspruch 11 oder 12, **dadurch gekennzeichnet, dass** die Radlaufflächen (11) der Messwagenräder (12) zylinderförmig ausgebildet sind und wenigstens die einem Schienenstrang zugeordneten Spurkränze (13) gegenüber dem jeweils zugeordneten Radlaufflächenzylinder (11) in Richtung der Zylinderachse (14) beweglich gelagert und besagte Spurkränze (13) gegen das zu vermessende Gleis (2) anstellbar sind.

## Claims

1. Method for determining the wear state of a track (1), in particular the frog and the tongue of a switch, comprising sensors (4, 5) which are arranged on a measuring carriage (3), which can be moved along the track (1) to be surveyed, for surveying the track (1), **characterised in that** by means of at least one PMD sensor (4) directed towards a track (1) to be surveyed, measurement data are recorded and evaluated and stored in a computer storage unit (7), wherein the continuous rail serves as a reference and the PMD sensor (4) can be displaced on the measuring carriage (3) transversely with respect to the undercarriage longitudinal axis along a linear guide (8) and both the respective position of the PMD sensor (4) on the measuring carriage (3) and the distance travelled by the measuring carriage (3) on the track (1) are measured and supplied to the computer storage unit (7), and **in that** the wear state is determined from a comparison of the 3D model of the actual state of the track (1) with a desired 3D model of the track (1).

2. Method as claimed in claim 1, **characterised in that** during the movement of the PMD sensor (4) with the measuring carriage (3) along the track (1), in particular via switch devices, and/or transversely with respect to the undercarriage longitudinal axis, the actual state of the track (1) and the switch devices, in particular the tongue and frog region of a switch and individual stock rails or wing rails, are surveyed and evaluated to form a continuous 3D model and stored.

3. Method as claimed in claim 1 or 2, **characterised in that** the 3D model of the actual state of the track (1) is compared with a desired 3D model of the track (1), the incidences of wear present are measured and the adherence to or the exceedance of the specified tolerances is examined and optionally displayed.

4. Method as claimed in any one of claims 1 to 3, **characterised in that** in addition the camber of the track (1) is measured by means of an inclination angle sensor (10) and the warping of the string is measured.

5. Method as claimed in any one of claims 1 to 4, **characterised in that** the reference rail is also detected by the PMD sensor (4).

6. Method as claimed in any one of claims 1 to 5, **characterised in that** the measuring carriage (3), in particular the linear guide, is allocated at least one second PMD sensor (4) which surveys the line serving as a reference and the reference rail is thereby also represented as a 3D model.

7. Method as claimed in any one of claims 1 to 6, **characterised in that** the track (1) to be surveyed is surveyed by means of two PMD sensors (4) which are directed towards the track (1) for detecting the track (1) stereoscopically.

8. Method as claimed in any one of claims 1 to 7, **characterised in that** in order to calibrate the PMD sensor system a calibration object, in particular a calibration plate having a calibration profile is provided and is arranged at a known spaced interval with respect to the PMD sensor.

9. Method as claimed in any one of claims 1 to 8, **characterised in that** the measuring carriage (3) is pressed against the reference rail.

10. Device for determining the wear state of a track (1), in particular the frog and the tongue of a switch, comprising sensors (4, 5), which are arranged on a measuring carriage (3) comprising at least two axles (2), for surveying the track (1) and comprising a distance measurement sensor (5) for the measuring carriage distance travelled, **characterised in that** the axles (2) are arranged in an undercarriage (6), to which at least one PMD sensor (4) is allocated which is directed towards a track (1) to be surveyed and can be displaced transversely with respect to the undercarriage longitudinal axis along a linear guide (8), and comprising a computer storage unit (7) for evaluating and storing the sensor data and for determining the wear state from a comparison of the 3D model of the actual state of the track (1) with a desired 3D model of the track (1).

11. Device as claimed in claim 10, **characterised in that** the undercarriage (6) is allocated a linear guide (8) along which the at least one PMD sensor (4) can be displaced transversely with respect to the undercarriage longitudinal axis, wherein the linear guide (8) is allocated preferably one position sensor (9) for determining the PMD sensor position along the guide.

12. Device as claimed in claim 11, **characterised in that** the undercarriage (5) is allocated an inclination angle sensor (10) for measuring the camber of the track.

13. Device as claimed in claim 11 or 12, **characterised in that** the wheel running surfaces (11) of the measuring carriage wheels (12) are formed in a cylindrical manner and at least the wheel flanges (13) allocated to a line are supported with respect to the respectively allocated wheel running surface cylinder (11) so as to be able to move in the direction of the cylinder axis (14) and said wheel flanges (13) can be adjusted with respect to the track (2) to be surveyed.

## Revendications

1. Procédé de détermination de l'état d'usure d'un rail (1), en particulier du coeur de croisement et de la lame d'une aiguille, avec, pour mesurer le rail (1), des capteurs (4, 5) disposés sur un chariot de mesure (3) mobile le long du rail (1) à mesurer, **caractérisé en ce que** des données de mesure sont acquises à l'aide d'au moins un capteur PMD (4) dirigé vers un rail (1) à mesurer et évaluées et sauvegardées dans un module de stockage et calcul (7), le rail continu servant de référence et le capteur PMD (4) pouvant se déplacer sur le chariot de mesure (3), transversalement à l'axe longitudinal du bogie, le long d'un guide linéaire (8) et la position respective du capteur PMD (4) sur le chariot de mesure (3) ainsi que la distance parcourue par le chariot de mesure (3) sur le rail (1) étant mesurées et envoyées au module de stockage et calcul (7) et **en ce que** l'état d'usure est déterminé à partir d'une comparaison du modèle 3D de l'état réel du rail (1) avec un modèle théorique 3D du rail (1).

2. Procédé selon la revendication 1, **caractérisé en ce que** pendant le mouvement du capteur PMD (4) avec le chariot de mesure (3) le long du rail (1), en particulier au-dessus des dispositifs d'aiguillage et/ou transversalement à l'axe longitudinal du bogie, l'état réel du rail (1) et des dispositifs d'aiguillage, en particulier la zone du coeur de croisement ou de la lame d'une aiguille, ainsi que des pattes de lièvre ou contre-rails individuels, sont mesurés et évalués pour un modèle 3D en continu et enregistrés.

3. Procédé selon la revendication 1 ou 2, **caractérisé en ce que** le modèle 3D de l'état réel du rail (1) est comparé avec un modèle théorique 3D du rail (1), les usures existantes sont mesurées et le respect ou les dépassements des tolérances prédéfinies sont contrôlées et le cas échéant, affichées.

4. Procédé selon l'une des revendications 1 à 3, **caractérisé en ce qu'**en outre, le surhaussement du rail (1) est mesuré avec un capteur d'angle d'inclinaison (10) et la distorsion de la voie ferrée est mesurée.

5. Procédé selon l'une des revendications 1 à 4, **caractérisé en ce que** le rail de référence est également saisi par le capteur PMD (4).

6. Procédé selon l'une des revendications 1 à 5, **caractérisé en ce qu'**est associé au chariot de mesure (3), en particulier au guide linéaire, au moins un deuxième capteur PMD (4) qui mesure la voie ferrée servant de référence et reproduit ainsi, aussi, la voie ferrée en tant que modèle 3D.

7. Procédé selon l'une des revendications 1 à 6, **caractérisé en ce que** le rail (1) à mesurer est mesuré avec deux capteurs PMD (4) dirigés vers le rail (1) pour une saisie stéréoscopique du rail (1).

8. Procédé selon l'une des revendications 1 à 7, **caractérisé en ce que** pour le calibrage de l'installation de capteurs PMD, il est prévu un objet de calibrage, en particulier une plaque de calibrage avec un profil de calibrage qui est disposé dans l'espacement connu pour le capteur PMD.

9. Procédé selon l'une des revendications 1 à 8, **caractérisé en ce que** le chariot de mesure (3) est pressé contre le rail de référence.

10. Dispositif de détermination de l'état d'usure d'un rail (1), en particulier du coeur de croisement et de la lame d'une aiguille, avec, pour mesurer le rail (1), des capteurs (4, 5) disposés sur un chariot de mesure (3) comprenant au moins deux axes (2) et avec un capteur de mesure de déplacement (5) pour la distance parcourue par le chariot de mesure, **caractérisé en ce que** les axes (2) sont disposés sur un bogie (6), auquel est associé au moins un capteur PMD (4), dirigé vers un rail (1) à mesurer, pouvant se déplacer transversalement à l'axe longitudinal du bogie, le long d'un guide linéaire (8), et avec un module de stockage et calcul (7), pour évaluer et sauvegarder les données du capteur et pour déterminer l'état d'usure à partir d'une comparaison du modèle 3D de l'état réel du rail (1) avec un modèle théorique 3D du rail (1).

11. Dispositif selon la revendication 10, **caractérisé en ce qu'**est associé au bogie (6) un guide linéaire (8), le long duquel au moins un capteur PMD (4) peut se déplacer transversalement à l'axe longitudinal du bogie, un capteur de positionnement (9) étant de préférence associé au guide linéaire (8) pour définir la position du capteur PMD le long du guide.

12. Dispositif selon la revendication 11, **caractérisé en ce qu'**un capteur d'angle d'inclinaison (10) est associé au bogie (6.) pour mesurer le surhaussement du rail.

13. Dispositif selon la revendication 11 ou 12, **caractérisé en ce que** les surfaces de roulement (11) des roues (12) du chariot de mesure sont de forme cylindrique et au moins les boudins (13) associés à une voie ferrée sont placés mobiles dans le sens de l'axe du cylindre (14) par rapport au cylindre de la surface de roulement (11) respectivement associé et lesdits boudins (13) sont réglables contre le rail (2) à mesurer.
